# EUROPEAN PATENT SPECIFICATION

(11) **EP 0 223 265 B1**
(45) Date of publication and mention of the grant of the patent: **31.03.1993**
(21) Application number: 86117025.6
(22) Date of filing: 27.05.1983
(51) Int. Cl.: C04B 41/53, F25B 21/00, H01F 1/34

(54) **A method for manufacturing the working material used in a magnetic refrigerator**
Verfahren zur Herstellung des in einem magnetischen Kühler verwendeten Arbeitsstoffes
Procédé de fabrication de la matière de travail utilisée dans un réfrigérateur magnétique

(30) Priority: 31.08.1982 JP 150903/82; 31.08.1982 JP 150939/82
(43) Date of publication of application: 27.05.1987
(62) Divisional of application: 83303090.1
(73) Proprietor: KABUSHIKI KAISHA TOSHIBA, Kawasaki-shi, Kanagawa-ken 210 (JP)
(72) Inventor: Nakagome, Hideki, Suginami-ku, Tokyo (JP); Yasuda, Satoshi, Tama-ku Kawasaki-shi (JP); Sato, Akio, Kohoku-ku Yokohama-shi (JP)
(74) Representative: Freed, Arthur Woolf

(56) References cited:
- DE-A- 1 521 711
- DE-A- 1 771 359
- PHYSICAL REVIEW B, vol. 3, no. 7, 1st April 1971, pages 2310-2343; D.P. LANDAU et al.: "Magnetic and thermal properties of dysprosium aluminum garnet. I. Experimental results for the two-sublattice phases"
- CRYOGENICS, vol. 21, no. 10, October 1981, pages 579-584, IPC Business Press Ltd; C. DELPUECH et al.: "Double acting reciprocating magnetic refrigerator: first experiments"
- JOURNAL OF THE ELECTROCHEMICAL SOCIETY, vol. 120, no. 5, May 1973, pages 678-685; DC. MILLER: "Defects in garnet substrates and epitaxial magnetic garnet films revealed by phosphoric acid etching"
- CRYOGENICS, vol. 22, no. 2, February 1982, pages 73-80, Butterworth & Co. (Publishers) Ltd, GB; J.A. BARCLAY et al.: "Materials for magnetic refrigeration between 2 K and 20 K
- CRYOGENICS, vol. 17, no. 12, December 1977, pages 689-693; W.P. PRATT Jr., et al.: "A continuous demagnetization refrigerator operating near 2 K and a study of magnetic refrigerants"
- TECHNICAL DIGEST, no. 18, April 1970, page 1; E.G. ADAMS: "Phosphoric acid etching of titanium"
- JOURNAL OF CRYSTAL GROWTH, vol. 27, 1974, pages 274-281, North-Holland Publishing Co.: D.C. MILLER et al.: "Stress relief in magnetic garnet films grown by liquid phase epitaxy"
- INTERNATIONAL METALLURGICAL REVIEWS, vol. 20, no. 194, March 1975, pages 29-55; J.W. DINI: "Chemical milling"
- Cryogenics, volume 18, 1976, pages 535-537, Barclay J.A. et al.
- Proceedings of 9th International Cryogenic Engineering Conference, 11-14 May 1982, pages 30-33, (Butterworth)

## Description

This invention relates to a method for manufacturing the working material used in a magnetic refrigerator. Such a working material radiates heat when it is magnetized and absorbs heat when it is demagnetized.

Magnetic refrigerators are based on the well-known phenomenon that working materials consisting of rare-earch metal compounds, such as gadolinium-gallium-garnet (Gd₃Ga₅O₁₂, abbreviated GGG), or alloys, such as an alloy of erbium and nickel, radiate heat when they are magnetized and absorb heat when they are demagnetized. The temperature of the working material is lowered by adiabatic demagnetization. The working material lowered in temperature extracts heat from an object to cool it. These magnetic refrigerators have an advantage over conventional gas refrigerators in having improved refrigerating capacity per unit volume of the object for cooling.

The magnetic refrigerators require two heat exchanging processes to be executed alternately: a heat discharging process for discharging heat generated from a magnetic material or working material by adiabatic magnetization, and a heat absorption process for extracting heat from the object by means of the working material cooled by adiabatic demagnetization. To obtain a high-efficiency refrigerating cycle through the two alternating heat exchanging processes, it is necessary to securely prevent heat transfer from the working material to the object in the heat discharging process, and to quickly transfer heat from the object to the working material in the heat absorption process.

A prior art magnetic refrigerator is provided with chambers for individually executing the heat discharging and absorption processes so that the working material alternately enters the chambers. For efficient heat exchange, it is necessary to fully maintain the air-tightness between the working material and chambers. In practice, however, it is technically difficult to securely seal the working material and the chambers. Insufficient sealing leads to a reduction in refrigerating efficiency. Moreover, the need of a transfer mechanism for the working material complicates the construction of the refrigerator. Proceeding of the Ninth International Cryogenic Conference (11-14 May 1982, pages 30-33 (Butterworth)) discloses that thermal conductivity λ in the low low temperature range below 20K considerably depends on the dislocation density, impurity ions in the sample and on the specimen size.

The refrigerating efficiency also depends on the time required for heat exchange, that is, for heat absorption and heat discharging. Therefore, the magnetic material or working material for magnetic refrigeration requires not only great magnetic moment but also high thermal conductivity within the working temperature range of the refrigerator.

The working materials are generally manufactured by cutting and shaping lumps of magnetic material. The thermal conductivity of the working materials normally tends to increase as the temperature is lowered, peaking at 10°K to 40°K, and to decrease as the temperature is lowered further. The thermal conductivity on the lower-temperature side of the peak value range has been found by the inventors to vary with the surface condition of the working material, and will be reduced if work distortion remains on the surface. In order to operate the magnetic refrigerator with high refrigerating efficiency in a very low temperature range, the inventors have found it desirable to use a working material free from work distortion. However, it is difficult to remove such work distortion on the surface of the working material.

An object of the invention is to provide a method for manufacturing a working material used in a magnetic refrigerator, capable of easily removing work distortion on the surface of the working material.

A further object of the invention is to provide a method for manufacturing a working material improved in thermal conductivity at very low temperature to ensure higher magnetic refrigerating efficiency.

A method of manufacturing a block of a working material for a magnetic refrigerator, comprising machining a lump of magnetic material to produce a block with a predetermined shape, the magnetic material being a material which radiates heat when magnetized and absorbs heat when de-magnetized, characterized by comprising the step of etching the block to remove a work distortion layer produced on the surface thereof by the machining, the said etching process being continued until a surface layer having a thickness of 50 to 60 microns is removed so that the thermal conductivity of the block is increased.

Preferably, said etching process is accomplished by immersing the block in an aqueous solution of phosphoric acid at approximately 160°C.

In accordance with this invention, a surface work distortion layer produced by machining of the block is removed to improve the thermal conductivity of the working material at very low temperature.

This invention can be more fully understood from the following detailed description when taken in conjunction with the accompanying drawings, in which:
Fig. 1 is a cut away, perspective view of a first magnetic refrigerator:
Fig. 2 is a cut away, perspective view of a second magnetic refrigerator: and
Fig. 3 is a graph showing the thermal conductivity of working materials for magnetic refrigeration according to the invention.

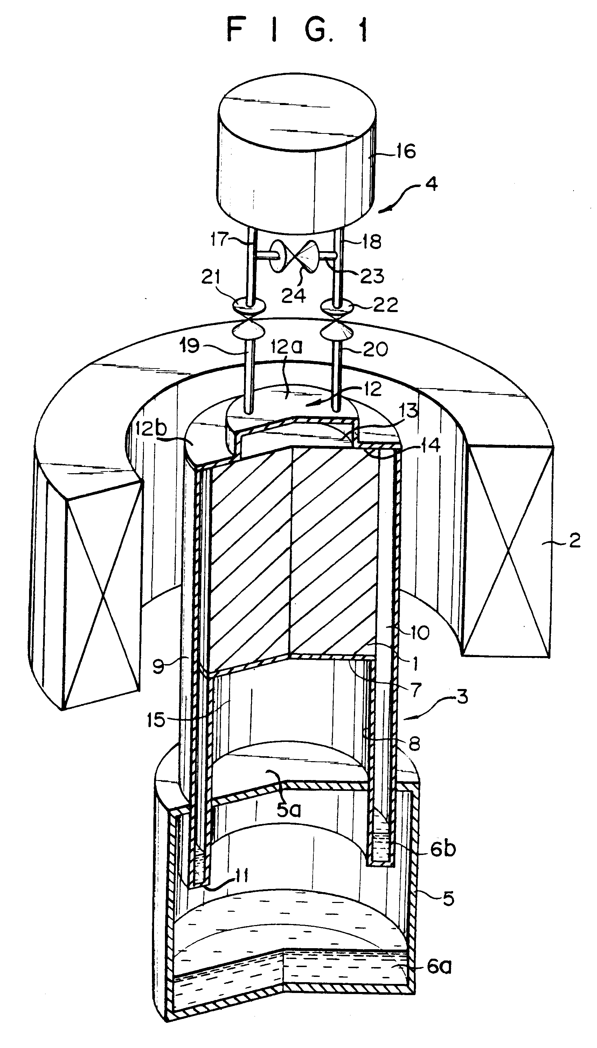

Fig. 1 shows a first magnetic refrigerator. This magnetic refrigerator is used for helium cooling, and comprises a working material 1, a superconudctive coil 2, a heat pipe 3, and a heat absorbing means 4 which are located above a reservoir 5 storing helium as the object to be cooled. The working material 1, the superconductive coil 2, the heat pipe 3, and the reservoir 5 are housed in a vacuum container (not shown) and kept in a vacuum.

The reservoir 5 is in the form of a cylinder having top and bottom walls. Part of the helium is stored as liquid helium 6a in the reservoir 5, while the remaining part is hermetically kept as gaseous helium in the reservoir 5.

The working material 1 is in the form of a cylinder, and is laid on a discoid bed plate 7 so that its longitudinal direction is vertical. The working material 1 is obtained by cutting a lump of magnetic material, such as gadolinium-gallium-garnet (GGG), an alloy of erbium and nickel, Dy₃Aℓ₅O₁₂, Gd₃Aℓ₅O₁₂ GdPO₄, or Dy₂Ti₂O₇. After the cutting work, the resultant cylindrical body is etched in an aqueous solution of phosphoric acid at approximately 160°C. By this etching process, a work distortion layer on the surface of the cylindrical body is removed to improve the thermal conductivity of the working material 1. The working material 1 radiates heat when magnetized and absorbs heat when demagnetized.

The heat pipe 3 includes coaxial inner and outer cylinders 8 and 9. The inner cylinder 8 has the same outside diameter as the diameter of the working material 1. The upper end of the inner cylinder 8 is hermetically fixed to the peripheral edge of the bed plate 7. The outer cylinder 9 is disposed coaxially with the inner cylinder 8 so as to face the respective peripheral surfaces of the working material 1 and the inner cylinder 8 at a space of approximately 200 to 500 microns therefrom. Each of the lower ends of the outer and inner cylinders 9 and 8 is hermetically fixed to a ring-shaped bottom plate 11. A hat-shaped top plate 12 includes a projected central portion 12a in the center and a collar portion 12b around the same. The upper end of the outer cylinder 9 is hermetically fixed to the peripheral edge of the collar portion 12b. Part of the lower surface of the collar portion 12b is laid on the top face of the working material 1, and a sealing member 14 is interposed between them. An internal space 10 of the heat pipe 3 is defined in the region where the inner peripheral surface of the outer cylinder 9 faces the outer peripheral surface of the inner cylinder 8 and the peripheral surface of the working material 1. Thus, the internal space 10 is directly in contact with the peripheral surface of the working material 1 so that the latter functions as a condensing surface of the heat pipe 3. The internal space 10 is sealed up by the sealing member 14. Helium gas is sealed in the internal space 10, and liquid helium 6b exists at the bottom portion of the internal space 10. The lower portions of the inner and outer cylinders 8 and 9 are located in the internal space of the reservoir 5, penetrating a top plate 5a of the reservoir 5. The inner and outer cylinders 8 and 9 are hermetically fixed to the top plate 5a. A space 15 defined by the bed plate 7, the inner cylinder 8, and the top plate 5a is kept in a vacuum so that heat is prevented from being transferred from the reservoir 5 to the working material 1. The top plate 12, the outer and inner cylinders 9 and 8, and the bed plate 7 are made of a nonmagnetic material or materials. Some of these members may be formed integrally. Alternatively, these may he manufactured by joining different materials together. More specifically, the heat exchanging capability of the heat pipe 3 can be improved by forming those portions of the inner and outer cylinders 8 and 9 which are located inside the reservoir 5 from a material with high thermal conductivity and those portions of the cylinders 8 and 9 outside the reservoir 5 from a material with low thermal conductivity.

The superconductive coil 2 is disposed concentrically with the working material 1 at a suitable distance from the outer cylinder 9 so as to surround the working material 1. The superconductive coil 2 is kept at a very low temperature, and is intermittently supplied with current from a suitable power source (not shown). Thus, the working material 1 is repeatedly magnetized and demagnetized by the coil 2.

A cooling space 13 sealed by the sealing member 14 is defined between the central portion 12a of the top plate 12 and the top face of the working material 1. The heat absorbing means 4 to absorb heat from the working material 1 includes a miniature hydrogen refrigerator unit 16 located over the top plate 12. The hydrogen refrigerator unit 16 itself is of a conventional type, and produces helium gas at a temperature of 20°K or below. The refrigerator unit 16 has an outlet pipe 17 for supplying the helium gas as a refrigerant and an inlet pipe 18 for returning the helium gas to the refrigerator unit 16. Valves 21 and 22 for switching are provided at the extreme ends of the outlet and inlet pipes 17 and 18, respectively. Pipes 19 and 20 connect the cooling space 13 inside the top plate 12 with the valves 21 and 22, respectively. A by-pass pipe 23 connects the outlet and inlet pipes 17 and 18, and a valve 24 for switching is disposed in the middle of the pipe 23. Thus, when the valves 21 and 22 are closed while the valve 24 is open, then the helium gas from the refrigerator unit 16 circulates through the outlet pipe 17, the pipe 23, and the inlet pipe 18. When the valves 21 and 22 are open while the valve 24 is closed, on the other hand, the helium gas from the refrigerator unit 16 circulates through the outlet pipe 17, pipe 19, cooling space 13, pipe 20, and inlet pipe 18. At this time, the heat or the working material 1 is extracted by the helium gas flowing through the cooling space 13. Accordingly, if the working material 1 generates heat, the generated heat is discharged through the medium of the helium gas to restrain the temperature of the working material 1 from rising.

There will now be described the operation of the refrigerator constructed in this manner, along with the switching operation of the valves 21, 22 and 24 and energization of the coil 2. First, the valves 21 and 22 are closed, and the valve 24 is opened. Thus, the hydrogen refrigerator unit 16 is actuated to cause the helium gas at 20°K or below to circulate through the outlet pipe 17, pipe 23, and inlet pipe 18. Since the coil 2, working material 1, heat pipe 3, and reservoir 5 are housed in the vacuum container, they are kept in an adiabatic condition, thermally disconnected from the outside.

The superconductive coil 2 is energized, then the valves 21 and 22 are opened, and the valve 24 is closed. The working material 1 is adiabatically magnetized by the coil 2 to radiate heat This heat is extracted from the top face of the working material 1 by the helium gas at 20°K or below flowing through the cooling space 13, and is discharged together with the helium gas. Thus, the temperature of the working material 1 is prevented from being increased by the adiabatic magnetization.

Subsequently, the valve 24 is opened, the valves 21 and 22 are closed, and the current supply to the coil 2 is stopped. As a result, application of the magnetic field to the working material 1 is interrupted to adiabatically demagnetize the working material 1, so that the temperature of the working material 1 is lowered rapidly. When the temperature of the working material 1 is lowered to the temperature of liquefaction of helium gas, i.e., 4.2°K or below, the helium gas in the internal space 10 of the heat pipe 3 is cooled to be liquefied, and condenses on the peripheral surface of the working material 1. Drops of the condensed liquid helium are cooled to a temperature below 4.2°K, and fall into the space 10 of the heat pipe 3 to be stored as the liquid helium 6b at the lower portion of the heat pipe 3. The helium gas in the reservoir 5 is cooled by that portion of the heat pipe 3 which is located inside the reservoir 5 and stores the liquid helium 6b. The helium gas in the reservoir 5 is cooled and liquefied, and condenses on the outer surface of the heat pipe 3 inside the reservoir 5. Drops of the condensed helium fall into the reservoir 5 to be stored therein as the liquid helium 6a. Accordingly, the helium gas in the helium reservoir 5 is cooled and liquefied by the heat pipe 3. Thus, heat is transferred in one direction from the reservoir 5 toward the working material 1 through the heat pipe 3.

Thereafter, the superconductive coil 2 is energized, the valves 21 and 22 are opened, and the valve 24 is closed. The working material 1 is adiabatically magnetized by the coil 2, and is cooled by the heat absorbing means 4. Then, the valve 24 is opened, the valves 21 and 22 are closed, and the current supply to the coil 2 is stopped. As a result, the working material 1 is adiabatically demagnetized and cooled rapidly. Heat is transmitted from the reservoir 5 to the working material 1 through the space 10 of the heat pipe 3. The adiabatic magnetization and demagnetization of the working material 1 are repeated, and the helium gas and the liquid helium 6a in the reservoir 5 as the objects for cooling are cooled.

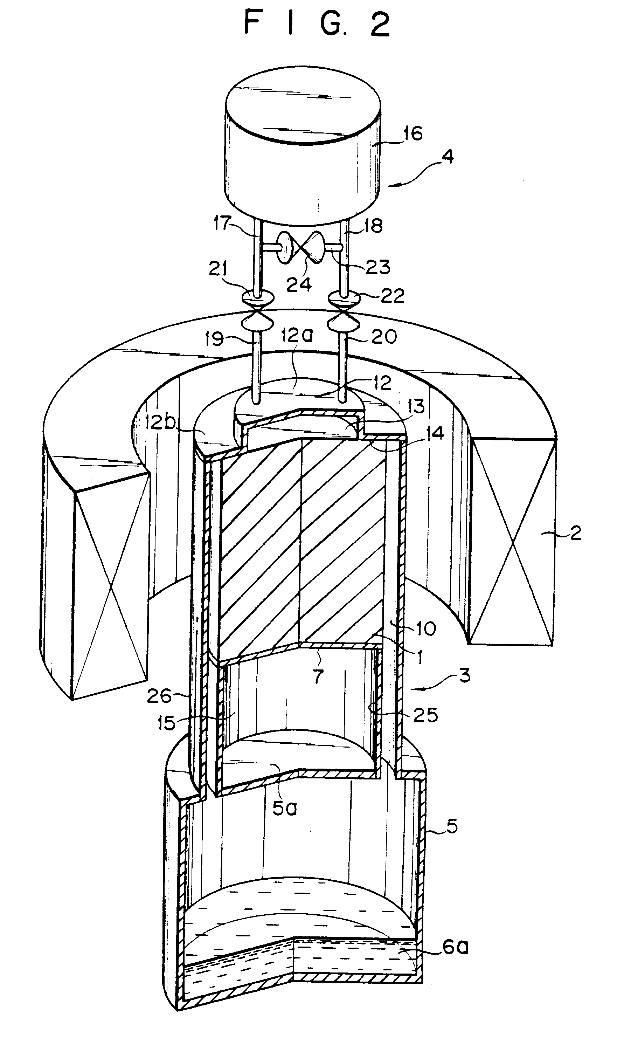

Fig. 2 shows a second magnetic refrigerator. In Fig. 2, like reference numerals are used to designate like portions shown in Fig. 1. A heat pipe 3 of this second magnetic refrigerator differs from the heat pipe 3 shown in Fig. 1 in that it communicates with the interior of a reservoir 5 as the object for cooling. The lower ends of outer and inner cylinders 26 and 25 of the heat pipe 3 are fixed to a top plate 5a of the reservoir 5. The inner cylinder 25 or the top plate 5a is supported by a suitable support means (not shown). Accordingly, an internal space 10 of the heat pipe 3 is connected to the internal space of the reservoir 5. In this refrigerator helium gas or liquid helium 6a in the reservoir 5 is cooled by the same operation as in the refrigerator shown in Fig. 1. According to the second refrigerator, the helium gas in the reservoir 5 as the object is cooled directly by the working material 1, so that the process of heat exchange between the heat transfer medium in the heat pipe 3 and the object is unnecessary. Thus, the refrigerating efficiency of the refrigerator can further be improved.

There will now be described one embodiment of a method for manufacturing working material for the magnetic refrigerator according to this invention. A cylindrical block is cut from a lump of magnetic material, such as GGG (gadolinium-gallium-garnet, GD₃Ga₅O₁₂), Dy₃Aℓ₅O₁₂_{,} Gd₃Aℓ₅O₁₂_{,} GdPO₄ or Dy₂Ti₂O₇, and its surface is lapped. This block is immersed in an aqueous solution of phosphoric acid kept at approximately 160°C, and is etched to be cleared of a surface layer with a thicknee of approximately 50 to 60 microns. In this manner, a work distortion layer on the surface of the block can be removed easily and securely without complicating the manufacturing process. Thus, a working material for magnetic refrigeration with high thermal conductivity can be manufactured with ease.

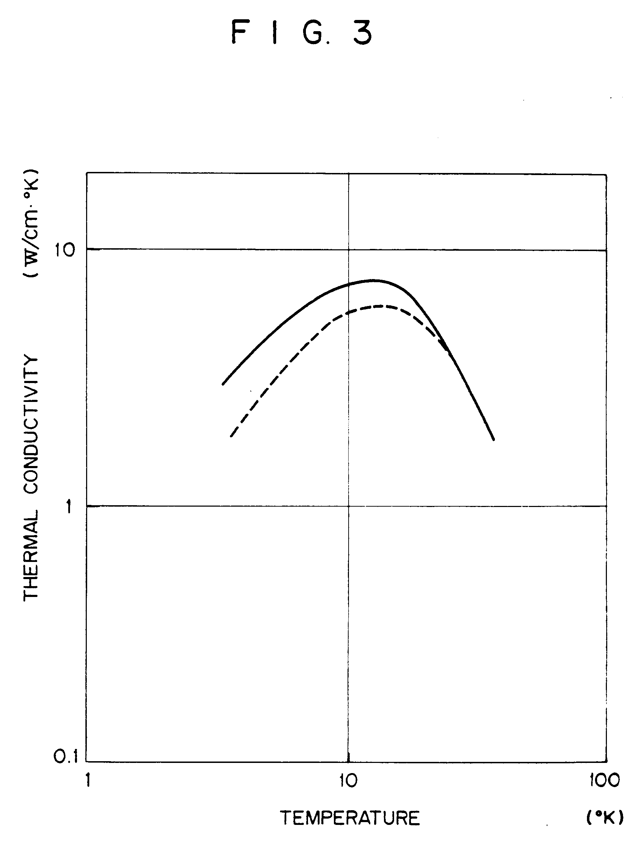

Fig. 3 shows the temperature-induced variation of the thermal conductivity of the working material at very low temperature. In Fig. 3, a full line represents the thermal conductivity of a sample of the working material cleared of the surface work distortion layer by etching, while a broken line represents that of another sample only lapped. As seen from Fig. 3, the thermal conductivity (full line) of the etched working material is much higher than that (broken line) of the unetched working material especially in a temperature range of 20°K and below. Thus, the very-low-temperature refrigerating efficiency of the magnetic refrigerator may be improved by the use of the working material cleared of the surface work distortion layer.

The heat absorbing means 4 is not, of course, limited to the construction of the aforementioned refrigerator in which a refrigerant (helium gas) is circulated over the top face of the working material 1 for contact cooling. For example, the magnetic refrigerator may use a heat pipe for the heat absorbing means. In this case, the condensing section of the heat pipe 3 for cooling the helium gas in the reservoir 5 is provided at the lower half portion of the peripheral surface of the working material 1, while the evaporating section of the heat pipe of the heat absorbing means 4 is provided at the upper half portion of the peripheral surface of the working material 1. The object for cooling is not limited to the gaseous body which was used in the foregoing embodiments. For example, a solid object may be cooled by bringing it into contact with the lower end portion of the heat pipe 3 according to the first embodiment. The heat pipe 3 need not always be cylindrical. Moreover, the heat pipe 3 need not always be so positioned as to extend vertically, and may be positioned in a slanting manner.

In the above refrigerators, the working material 1 is magnetized or demagnetized by energizing or deenergizing the superconductive coil 2. Alternatively, the working material may be placed in or removed from a magnetic field by periodically moving the energized coil 2 in its axial direction. Various other means than the superconductive coil may be used for applying the magnetic field to the working material 1.

## Claims

1. A method of manufacturing a block of a working material for a magnetic refrigerator, comprising machining a lump of magnetic material to produce a block with a predetermined shape, the magnetic material being a material which radiates heat when magnetized and absorbs heat when de-magnetized, characterized by comprising the step of etching the block to remove a work distortion layer produced on the surface thereof by the machining, the said etching process being continued until a surface layer having a thickness of 50 to 60 microns is removed so that the thermal conductivity of the block is increased.

2. A method according to claim 1, characterized in that said etching process is accomplished by immersing the block in aqueous solution of phosphoric acid at approximately 160°C.

3. A method according to any of claims 1 to 3, characterized in that said magnetic material is selected from the group consisting of Gd₃Ga₅O₁₂, Dy₃Aℓ₅O₁₂, Gd₃Aℓ₅O₁₂, GdPO₄, and Dy₂Ti₂O₇.

4. A method according to any of claims 1 to 4, characterized in that said predetermined shape is cylindrical.

## Patentansprüche

1. Verfahren zur Herstellung eines Blocks eines Arbeitsstoffs für ein magnetisches Kälte- oder Kühlgerät, wobei ein Klumpen aus magnetischem Material zur Herstellung eines Blocks einer vorbestimmten Form zerspant wird und das magnetische Material ein solches ist, das Wärme abstrahlt, wenn es magnetisiert ist, und Wärme absorbiert, wenn es entmagnetisiert ist, gekennzeichnet durch den Schritt eines Ätzens des Blocks zwecks Entfernung einer durch die Zerspanung auf seiner Oberfläche gebildeten Bearbeitungsverformungsschicht, wobei der Ätzprozeß durchgeführt wird, bis eine 50 - 60 µm dicke Oberflächenschicht abgetragen ist, wodurch die Wärmeleitfähigkeit des Blocks erhöht wird.

2. Verfahren nach Anspruch 1, dadurch gekennzeichnet, daß der Ätzprozeß durch Eintauchen des Blocks in eine wäßrige Lösung von Phosphorsäure bei etwa 160^{o}C durchgeführt wird.

3. Verfahren nach einem der Ansprüche 1 und 2, dadurch gekennzeichnet, daß das magnetische Material aus der Gruppe Gd₃Ga₅O₁₂, Dy₃Aℓ₅O₁₂, Gd₃Aℓ₅O₁₂, GdPO₄ und Dy₂Ti₂O₇ gewählt wird.

4. Verfahren nach einem der Ansprüche 1 bis 3, dadurch gekennzeichnet, daß die vorbestimmte Form zylindrisch ist.

## Revendications

1. Procédé de fabrication d'un bloc d'un matériau de travail pour un réfrigérateur magnétique, comprenant l'usinage d'une masse de matériau magnétique pour produire un bloc présentant une forme prédéterminée, le matériau magnétique étant un matériau qui irradie de la chaleur lorsqu'il est magnétisé et qui absorbe de la chaleur lorsqu'il démagnétisé, caractérisé en ce qu'il comprend l'étape de gravure du bloc pour ôter une couche de déformation d'usinage produite sur sa surface par l'usinage, ledit processus de gravure étant poursuivi jusqu'à ce qu'une couche de surface présentant une épaisseur de 50 à 60 micromètres soit ôtée de telle sorte que la conductivité thermique du bloc soit augmentée.

2. Procédé selon la revendication 1, caractérisé en ce que ledit processus de gravure est réalisé en immergeant le bloc dans une solution aqueuse d'acide phosphorique à approximativement 160° C.

3. Procédé selon l'une quelconque des revendications 1 à 2, caractérisé en ce que ledit matériau magnétique est choisi dans le groupe qui comprend le Gd₃Ga₅O₁₂, le Dy₃Al₅O₁₂, le Gd₃Al₅O₁₂, le GdPO₄ et le Dy₂Ti₂O₇.

4. Procédé selon l'une quelconque des revendications 1 à 3, caractérisé en ce que ladite forme prédéterminée est cylindrique.
